# EUROPEAN PATENT SPECIFICATION

(11) **EP 2 328 314 B1**
(45) Date of publication and mention of the grant of the patent: **18.04.2018**
(21) Application number: 09807833.0
(22) Date of filing: 17.06.2009
(51) Int. Cl.: H04W 72/00

(54) **A METHOD FOR ACQUIRING/CONFIGURING THE MULTICAST/BROADCAST OVER SINGLE FREQUENCY NETWORK SUB-FRAME AND AN ACQUIRING APPARATUS THEREOF**
VERFAHREN ZUR ERFASSUNG/KONFIGURIERUNG VON MULTICAST/BROADCAST ÜBER EINZELFREQUENZNETZWERK-SUBRAHMEN UND ERFASSUNGSVORRICHTUNG DAFÜR
PROCÉDÉ D'ACQUISITION/CONFIGURATION DE LA SOUS-TRAME DE RÉSEAU DE DIFFUSION/MULTIDIFFUSION À FRÉQUENCE UNIQUE ET APPAREIL D'ACQUISITION CORRESPONDANT

(30) Priority: 21.08.2008 CN 200810210073
(43) Date of publication of application: 01.06.2011
(73) Proprietor: ZTE Corporation, Shenzhen, Guangdong 518057 (CN)
(72) Inventor: MA, Zijiang, Shenzhen Guangdong 518057 (CN); SHEN, Wu, Shenzhen Guangdong 518057 (CN); LI, Dapeng, Shenzhen Guangdong 518057 (CN)
(74) Representative: HGF Limited
(86) International application number: PCT/CN2009/072324
(87) International publication number: WO 2010/020134

(56) References cited:
- CN-A- 101 159 902
- CN-A- 101 184 076
- ALCATEL-LUCENT NOKIA NOKIA SIEMENS NETWORKS ET AL: "MBSFN signalling issues", 3GPP DRAFT; R2-081367, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sorrento, Italy; 20080215, 15 February 2008 (2008-02-15), XP050139096,
- CATT: "MBSFN subframe allocation", 3GPP DRAFT; R2-084248_MBSFN SUBFRAME ALLOCATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20080811, 11 August 2008 (2008-08-11), XP050319343,
- ALCATEL SHANGHAI BELL ET AL: "Coexistence of non-MBMS UE and MBSFN Document: Discussion & decision", 3GPP DRAFT; R2-081846 COEXISTENCE OF NON-MBMS UE AND MBSFN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Shenzhen, China; 20080325, 25 March 2008 (2008-03-25), XP050139540,
- NOKIA CORPORATION: "Summary of e-mail discussion on requirements from MBSFN subframe allocation signalling", 3GPP DRAFT; R2-082164 EMAIL SUMMARY ON MBSFN SIGNALLING REQUIREMENTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Kansas City, USA; 20080505 - 20080509, 2 May 2008 (2008-05-02), XP050603786,
- ERICSSON ET AL: "Signaling of the MBSFN subframe allocation parameter", 3GPP DRAFT; R2-082028 MBSFN SUBFRAME ALLOCATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Shenzhen, China; 20080404, 4 April 2008 (2008-04-04), XP050139666,
- LONG TERM EVOLUTION (LTE) :A TECHNICAL OVERVIEW 31 December 2007, pages 10 - 15, XP055005172
- TSG RAN WG4: "[Draft] LS Response on Transmission of Physical Layer Parameters", 3GPP DRAFT; R4-081209_L1_PARAMETE_TRANSMISSION_DRAFT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Kansas City, USA; 20080514, 14 May 2008 (2008-05-14), XP050179797, [retrieved on 2008-05-14]

## Description

### TECHNICAL FIELD

The present invention relates to the field of communications, and in particular, to a method for acquiring/configuring a multicast/broadcast over single frequency network (MBSFN for short) subframe and an acquiring apparatus.

### BACKGROUND

At present, in order to utilize mobile network resources effectively, the 3^{rd} generation partnership project (3GPP for short) has proposed a multimedia broadcast multicast service (MBMS for short) which realizes the share of a network resource by providing a point-to-multipoint service (data transmission from a data source to a plurality of users) in a mobile network and thus increases the utilization ratio of network resources, especially air interface resource.

As mentioned above, MBMS is a technology of transmitting the data of a shared network resource from a data source to a plurality of targets, and the MBMS provided by the 3GPP can realize the multicast and broadcast of both a full-text low-speed message and a high-speed multimedia service. The MBMS technology provided in a long term evolution (LTE) network is referred to as evolved MBMS (E-MBMS for short).

In LTE frequency division duplex (FDD for short) and LTE time division duplex (TDD for short), radio frames are classified into multicast/broadcast over single frequency network frames (MBSFN frame for short) and non-MBSFN frames (namely, unicast frames), wherein part of the subframes in an MBSFN frame are transmitted via an MBSFN, that is, the subframes in each MBSFN frame are further classified into MBSFN subframes and non-MBSFN subframes (namely, unicast subframes), wherein all the subframes of a non-MBSFN frame are transmitted through unicast but not via an MBSFN.

In order to increase the resource utilization ratio of an E-MBMS, one carrier frequency can support one or more multicast channels (MCH for short), wherein the physical resource allocated for a specific MCH can use a specific pattern of subframe which is referred to as MCH subframe allocation pattern (MSAP for short).

MBMSs belonging to the same MBSFN area can be mapped to the same MCH, wherein each MBMS can be born on different MBMS point-to-multipoint traffic channels (MTCH for short), that is, multiple MTCHs in the same MBSFN area can be mapped to the same MCH, wherein each MTCH corresponds to one MBMS, multiple MCHs correspond to different MBSFN areas, each MBSFN subframe allocation method (MSAP) corresponds to one MCH, and each MCH can include or more MTCHs.

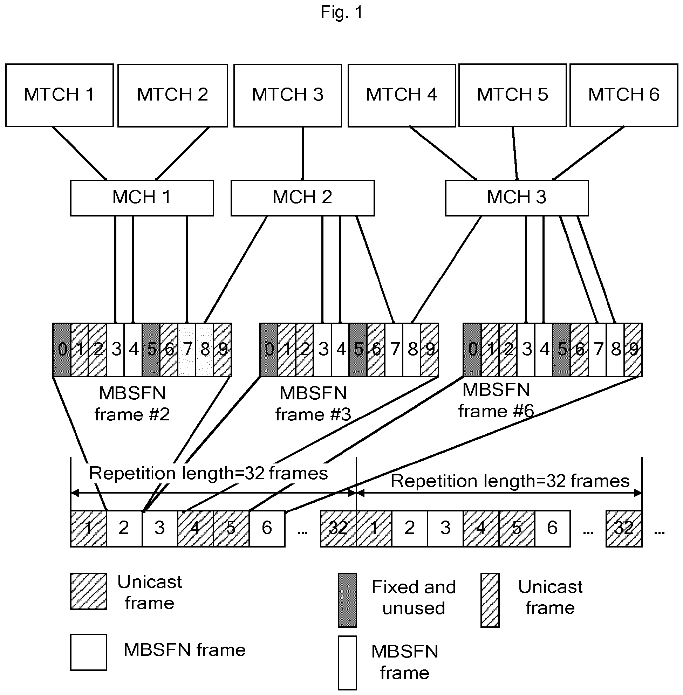

Fig. 1 is a schematic diagram illustrating the mapping of multiple MTCHs to multiple MCHs and the MBSFN subframe allocation of an MCH according to a related technology, as shown in this figure, in the case where a repetition length is equal to 32 frames, an MCH 1 corresponds to #3, #4 and #7 in an MBSFN frame #2, an MCH 2 corresponds to #8 in the MBSFN frame #2 and #3, #4 and #7 in an MBSFN frame #3, an MCH 3 corresponds to #8 in the MBSFN frame #3 and #3, #4, #7 and #8 in an MBSFN frame #6, an MTCH1 and an MTCH2 are mapped to the MCH1, an MTCH3 is mapped to the MCH2, and an MTCH4, an MTCH5 and an MTCH6 are mapped to the MCH3.

In the FDD or TDD of an LTE network, a user equipment (UE for short), no matter whether it receives an MBMS or not, is required to determine whether each radio frame is an MBSFN frame and whether each subframe in an MBSFN frame uses an MBSFN, that is, the UE is required to determine whether each subframe in an MBSFN frame is an MBSFN subframe or a non-MBSFN subframe so that a determination can be made on whether an MBSFN reference signal or a cell-specific reference signal should be used on each subframe to perform a channel estimation, and a signal estimation is performed using an MBSFN reference signal if each subframe is an MBSFN subframe or a cell-specific reference signal if each subframe is a non-MBSFN subframe. Therefore, an evolved universal terrestrial radio access network (E-UTRAN for short) is required to inform the UE of the aforementioned information of each radio frame and each subframe via a system broadcast message, and the UE is also required to determine whether each radio frame/MBSFN frame is an MBSFN frame/MBSFN subframe so as to perform a channel estimation on each subframe.

In LTE, the subframe allocation of an MBSFN is divided into the following two levels: a radio frame level at which MBSFN frames in radio frames are periodically indicated in a repetition period; and a subframe level at which a 3-bit subframe allocation is adopted to orderly indicate, starting from a subframe with a small number, MBSFN subframes in sub-frames, wherein the value of the subframe allocation is ranged from 0-7; MBSFN subframe allocation is different in LTE FDD and LTE TDD as LTE FDD and LTE TDD are different from each other in physical structure. For LTE FDD, as subframes #0 and #5 cannot be allocated as MBSFN subframes, an MBSFN subframe allocation is performed starting from a subframe 1.

For LTE FDD, subframes #4 and #9 cannot be used as MBSFN subframes in some cases, for example, when the configuration of 3-4 paging subframes on a radio frame is needed in a cell, in addition to #0 and #5, #4 and #9 can also be used as paging subframes, as a subframe cannot be synchronously allocated as an MBSFN subframe and a paging subframe, neither #0 and #5 nor #4 and #9 can be used as MBSFN subframes, that is, at most 6 subframes can be allocated as MBSFN subframes on a radio frame, as shown in the following Table 1:

**Table 1: subframe allocation**

| MBSFN Subframe Allocation | Subframe number (#) |
|---|---|
| 1 | 1 |
| 2 | 1, 2 |
| 3 | 1, 2, 3 |
| 4 | 1, 2, 3, 6 |
| 5 | 1, 2, 3, 6, 7 |
| 6 | 1, 2, 3, 6, 7, 8 |

Subframe #9 is used as a paging subframe when the configuration of one paging subframe on a radio frame is needed in a cell, then, neither subframes #0 and #5 nor #9 can be used as MBSFN subframes, while subframe #4 can be used as an MBSFN subframe. That is, at most 7 subframes can be allocated as MBSFN subframes on a radio frame, as shown in the following Table 2:

**Table 2: subframe allocation**

| MBSFN Subframe Allocation | Subframe number (#) |
|---|---|
| 1 | 1 |
| 2 | 1, 2 |
| 3 | 1, 2, 3 |
| 4 | 1, 2, 3, 4 |
| 5 | 1, 2, 3, 4, 6 |
| 6 | 1, 2, 3, 4, 6, 7 |
| 7 | 1, 2, 3, 4, 6, 7, 8 |

It can be seen from the process above that there exist the following problems:
(1) when the value of an information unit 'subframe allocation' configured in a system broadcast message is 6, that is, when 6 MBSFN subframes are configured on a radio frame, if the number of the configured paging subframes is different, then the subframe numbers occupied by an MBSFN subframes are different, that is, different MBSFN subframes are allocated, which will lead to a difficulty in the channel estimation of the UE on each subframe , for example: if there are 4 paging subframes, then the value of 'subframe allocation' is 6, and MBSFN subframes are subframes #1, #2, #3, #6, #7 and #8; if there is 1 paging subframe, then the value of 'subframe allocation' is 7, and MBSFN subframes are subframes #1, #2, #3, #4, #6, #7 and #8, therefore, MBSFN subframes will be different in a different paging scene if a different number of paging subframes are configured.
(2) as the 'subframe allocation' of MBSFN subframes is completed on a network element of a multi-cell/multicast coordination entity (MCE for short) and the allocation of paging subframes is completed at an evolved node B (eNode B for short), it is difficult to coordinate resources between two network elements.

Document MBSFN signaling issues (3GPP DRAFT, R2-081367) discusses a MBSN signaling method for saving signaling capacity, in which the allocation is fixed or configured to cover a small set of allocations; and for the MBSFN subframe signaling on the level of subframes, it needs to be signalled which of the subframes within radio frame are MBSFN subframes.

### SUMMARY

Aiming at the problems that MBSFN subframes are different in a different paging scene as a different number of paging subframes are configured in this scene, and that it is difficult to coordinate resources between an MCE network element and an eNode B network element, the present invention provides a method for acquiring/configuring a multicast/broadcast over single frequency network subframe and an acquiring apparatus to address at least one of the problems above.

According to an aspect of the present invention, a method for acquiring a multicast/broadcast over single frequency network (MBSFN for short) subframe is provided, wherein a radio frame comprises 10 subframes numbered from 0 to 9.

According to the present invention, the method for acquiring an MBSFN subframe comprises the following steps that: an MBSFN subframe configuration rule is preset onto a user equipment, UE, side; wherein the MBSFN subframe configuration rule regulates the subframes configured as MBSFN subframes comprise 6 subframes numbered as #1, #2, #3, #6, #7 and #8; the user equipment acquires, from a base station, a system broadcast message in which MBSFN subframe configuration subframes according to the configuration rule and the MBSFN subframe configuration information.

Preferably, the MBSFN subframe configuration information is information on the number of MBSFN subframes.

Preferably, the step that the UE determines a subframe configuration according to information is included; and the UE determines the subframes that are configured as MBSFN subframes according to the MBSFN subframe configuration rule and the MBSFN subframe configuration information;
wherein the MBSFN subframe configuration information is information on the number of MBSFN subframes.

Preferably, the step that the UE determines a subframe configuration according to the MBSFN subframe configuration rule and the MBSFN subframe configuration information is specifically as follows: the UE determines the number of the subframes that are configured as MBSFN subframes according to the information on the number of MBSFN subframes; and the UE determines, starting from a subframe #1, the sub-frames that are configured as MBSFN subframes according to the determined subframe number, wherein subframes #0, #4, #5 and #9 cannot be configured as MBSFN subframes.

Preferably, the step of determining, starting from a subframe #1, the subframes that are configured as MBSFN subframes according to the determined subframe number specifically comprises: determining the subframe #1 is configured as MBSFN subframe when the number of subframes is 1; determining subframes #1 and #2 are configured as MBSFN subframes when the number of subframes is 2; determining subframes #1, #2 and #3 are configured as MBSFN subframes when the number of subframes is 3; determining subframes #1, #2, #3 and #6 are configured as MBSFN subframes when the number of subframes is 4; determining subframes #1, #2, #3, #6 and #7 are configured as MBSFN subframes when the number of subframes is 5; and determining subframes #1, #2, #3, #6, #7 and #8 are configured as MBSFN subframes when the number of subframes is 6.

According to an aspect of the present invention, a method for configuring a multicast/broadcast over single frequency network (MBSFN for short) subframe is further provided, wherein a radio frame comprises 10 subframes numbered from 0 to 9.

According to the present invention, the method for configuring an MBSFN subframe comprises the following steps of: presetting an MBSFN subframe configuration rule onto a network side; wherein the MBSFN subframe configuration rule regulates the subframes configured as MBSFN subframes comprise 6 subframes numbered as #1, #2, #3, #6, #7 and #8; and a MCE performs an MBSFN subframe configuration according to the configuration rule and sends a system broadcast message to a user equipment through a base station, wherein the information on the number of MBSFN subframes is included in a system broadcast message.

Preferably, the step of the MCE performs an MBSFN subframe configuration according to the MBSFN subframe configuration rule specifically comprises: configuring the subframe #1 as an MBSFN subframe when the number of subframes is 1; configuring subframes #1 and #2 as MBSFN subframes when the number of subframes is 2; configuring subframes #1, #2 and #3 as MBSFN subframes when the number of subframes is 3; configuring subframes #1, #2, #3 and #6 as MBSFN subframes when the number of subframes is 4; configuring subframes #1, #2, #3, #6 and #7 as MBSFN subframes when the number of subframes is 5; and configuring subframes #1, #2, #3, #6, #7 and #8 as MBSFN subframes when the number of subframes is 6.

According to an aspect of the present invention, a method for configuring a multicast/broadcast over single frequency network subframe is further provided, wherein a radio frame comprises 10 subframes numbered from 0 to 9.

According to another aspect of the present invention, an apparatus for acquiring an MBSFN subframe is further provided, the apparatus is applied to a UE side.

According to the present invention, the apparatus for acquiring an MBSFN subframe comprises: a storage module for storing a preset MBSFN subframe configuration rule which regulates the subframes configured as MBSFN subframes comprise 6 subframes numbered as #1, #2, #3, #6, #7 and #8; an acquisition module for acquiring, from a base station, a system broadcast message in which MBSFN subframe configuration information is included; and a determination module which is connected with the acquisition module and the storage module to determine the subframes that are configured as MBSFN subframes according to the MBSFN subframe configuration rule and the MBSFN subframe configuration information; wherein the MBSFN subframe configuration information is information on the number of MBSFN subframes.

By disallowing the configuration of subframes #4 and #9 as MBSFN subframes, the present invention addresses the problems that MBSFN subframes are different in a different paging scene as a different number of paging subframes are configured in this scene and that it is difficult to coordinate resources between an MCE network element and an eNode B network element, and consequentially simplifies the network configuration.

### BRIEF DESCRIPTION OF THE DRAWINGS

The accompanying drawings described herein are provided for a better understanding of the present invention and form one part of this application, and the exemplary embodiments of the present invention and the description thereof are provided for explaining the present invention but not limiting the present invention. In the accompanying drawings:
Fig. 1 is a schematic diagram illustrating the mapping of multiple MTCHs to multiple MCHs and the MBSFN subframe allocation of an MCH according to a related technology;
Fig. 2 is a flow chart of a method for acquiring an MBSFN subframe according to an embodiment 1 of the present invention;
Fig. 3 is a flow chart of a method for configuring an MBSFN subframe according to an embodiment 2 of the present invention;
Fig. 4 is a flow chart of a method for configuring an MBSFN subframe according to an embodiment 3 of the present invention; and
Fig. 5 is a block diagram illustrating the structure of an apparatus for acquiring an MBSFN subframe according to an embodiment of the present invention.

### DETAILED DESCRIPTION

### Function Overview

The present invention provides a method for acquiring/configuring an MBSFN subframe and an acquiring apparatus, wherein an MBSFN subframe configuration rule is set which regulates the subframes configured as MBSFN subframes comprise 6 subframes numbered as #1, #2, #3, #6, #7 and #8 and according to which a network side can perform an MBSFN subframe configuration, and a UE can determine the subframes that are configured as MBSFN subframes according to the MBSFN subframe configuration rule in combination with the information on the number of MBSFN subframes included in a system broadcast message.

The present invention is described below in detail with reference to the accompanying drawings in conjunction with embodiments.

### Method embodiments

### Embodiment 1

According to this example, a method for acquiring a multicast/broadcast over single frequency network (MBSFN for short) subframe is provided, wherein each radio frame comprises 10 subframes numbered from #0 to #9.

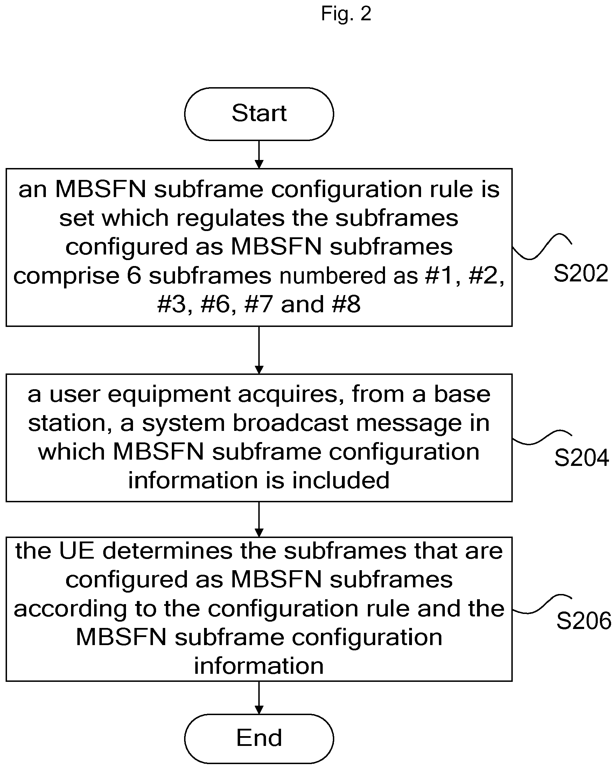

Fig. 2 is a flow chart of a method for acquiring an MBSFN subframe according to an embodiment 1 of the present invention, as shown in this figure, the method comprises the following steps that:
S202: an MBSFN subframe configuration rule is set which regulates the subframes configured as MBSFN subframes comprise 6 subframes numbered as #1, #2, #3, #6, #7 and #8;
S204: a user equipment acquires, from a base station, a system broadcast message in which MBSFN subframe configuration information is included, specifically, the MBSFN subframe configuration information can be information on the number of MBSFN subframes and is preferably included in the system information block type 2 information of the system broadcast message.
S206, the UE determines the subframes that are configured as MBSFN subframes according to the configuration rule and the MBSFN subframe configuration information.

Specifically, step S206 can be realized in the following way that: the UE determines the number of the subframes configured as MBSFN subframes according to the information on the number of MBSFN subframes that is included in the information unit 'MBSFN subframe configuration' in the system information block type 2 information, and then determines, starring from the subframe #1, the subframes that are configured as MBSFN subframes; at this time, it is clear for the UE that the subframes #0, #4, #5 and #9 cannot be configured as MBSFN subframes, that is, the subframes #0, #4, #5 and #9 are excluded from an MBSFN subframe configuration of a network side, wherein at most the following 6 subframes can be configured as MBSFN subframes numbered as #1, #2, #3, #6, #7 and #8.

Specifically, the subframe #1 is determined to be configured as an MBSFN subframe when the number of subframes is 1; subframes #1 and #2 are determined to be configured as MBSFN subframes when the number of subframes is 2; subframes #1, #2 and #3 are determined to be configured as MBSFN subframes when the number of subframes is 3; subframes #1, #2, #3 and #6 are determined to be configured as MBSFN subframes when the number of subframes is 4; subframes #1, #2, #3, #6 and #7 are determined to be configured as MBSFN subframes when the number of subframes is 5; and subframes #1, #2, #3, #6, #7 and #8 are determined to be configured as MBSFN subframes when the number of subframes is 6. By reference to an MBSFN subframe allocation shown in the following Table 3, the process above can be more clearly understood.

**Table 3: subframe allocation**

| MBSFN subframe allocation (the number of the configured MBSFN subframes) | Subframe number (#) (subframe number) |
|---|---|
| 1 | 1 |
| 2 | 1, 2 |
| 3 | 1, 2, 3 |
| 4 | 1, 2, 3, 6 |
| 5 | 1, 2, 3, 6, 7 |
| 6 | 1, 2, 3, 6, 7, 8 |

By adopting a method of setting an MBSFN subframe configuration rule to disallow the configuration of subframes #4 and #9 as MBSFN subframes, this embodiment enables the UE to determine the subframes that are configured as MBSFN subframes according to the configuration rule and the system broadcast message independent of the number of paging subframes.

### Embodiment 2

According to this example, a method for configuring a multicast/broadcast over single frequency network (MBSFN for short) subframe is provided, wherein each radio frame comprises 10 subframes numbered from #0 to #9.

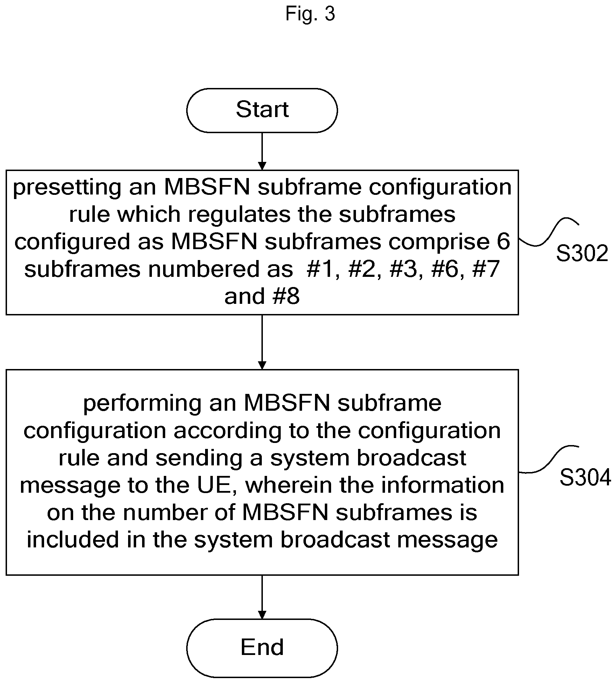

Fig. 3 is a flow chart of a method for acquiring an MBSFN subframe according to an embodiment 2 of the present invention, as shown in this figure, the method comprises the following steps of:
S302: presetting an MBSFN subframe configuration rule which regulates the subframes configured as MBSFN subframes comprise 6 subframes numbered as #1, #2, #3, #6, #7 and #8;
S304, performing an MBSFN subframe configuration according to the configuration rule and sending a system broadcast message to a UE, wherein the information on the number of MBSFN subframes is included in the system broadcast message.

Specifically, in step S304, performing an MBSFN subframe configuration according to the configuration rule specifically comprises: configuring the subframe #1 as an MBSFN subframe when the number of subframes is 1; configuring subframes #1 and #2 as MBSFN subframes when the number of subframes is 2; configuring subframes #1, #2 and #3 as MBSFN subframes when the number of subframes is 3; configuring subframes #1, #2, #3 and #6 as MBSFN subframes when the number of subframes is 4; configuring subframes #1, #2, #3, #6 and #7 as MBSFN subframes when the number of subframes is 5; and configuring subframes #1, #2, #3, #6, #7 and #8 as MBSFN subframes when the number of subframes is 6.

By adopting a method of setting an MBSFN subframe configuration rule to disallow the configuration of subframes #4 and #9 as MBSFN subframes, this embodiment enables an MCE to determine the subframes that can be configured as MBSFN subframes without coordinating with an eNode B during an MBSFN subframe configuration and therefore simplifies the configuration process of the MCE.

### Embodiment 3

According to this example, a method for configuring a multicast/broadcast over single frequency network (MBSFN for short) subframe is provided, wherein each radio frame comprises 10 subframes numbered from #0 to #9.

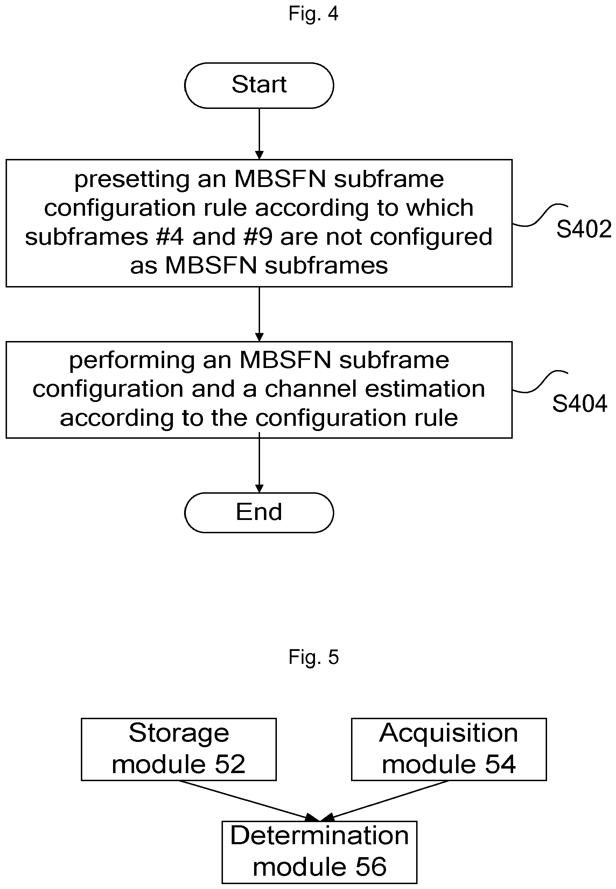

Fig. 4 is a flow chart of a method for acquiring an MBSFN subframe according to an embodiment 3 of the present invention, as shown in this figure, the method comprises the following steps of:
S402: presetting an MBSFN subframe configuration rule according to which subframes #4 and #9 cannot be configured as MBSFN subframes;
   and step S404, performing an MBSFN subframe configuration and a channel estimation according to the configuration rule, wherein the configuration of an MBSFN subframe according to the configuration rule is identical to that described in embodiment 2, so no more description is given here, and specifically, performing a channel estimation according to the configuration rule comprises the following steps that: a UE determines the number of MBSFN subframes according to the information on the number of MBSFN subframes in a received system broadcast message; and the UE determines the subframes that are configured as MBSFN subframes according to the determined number and the configuration rule, and performs a channel estimation according to the result of the determination, this process can refer to Table 3.

By adopting a method of setting an MBSFN subframe configuration rule to disallow the configuration of subframes#4 and #9 as MBSFN subframes, this embodiment enables an MCE to determine the subframes that can be configured as MBSFN subframes without coordinating with an eNode B during an MBSFN subframe configuration and therefore simplifies the configuration process of the MCE, besides, the UE can determine the subframes configured as MBSFN subframes according to the configuration rule and the system broadcast message independent of the number of paging subframes, the channel estimation of the UE is therefore facilitated.

### Apparatus embodiment

According to an example of the present invention, an apparatus for acquiring a multicast/broadcast over single frequency network (MBSFN for short) subframe is provided, wherein each radio frame comprises 10 subframes numbered from #0 to #9.

Fig. 5 is a block diagram illustrating the structure of an MBSFN subframe indictor according to an embodiment 1 of the present invention, as shown in this figure, the indicator apparatus comprises: a storage module 52, an acquisition module 54 and a determination module 56, each of which is described below in detail:
the storage module 52 is used for storing a preset MBSFN subframe configuration rule which regulates the subframes configured as MBSFN subframes comprise 6 subframes numbered as #1, #2, #3, #6, #7 and #8;
the acquisition module 54 is used for acquiring a system broadcast message from a base station, wherein MBSFN subframe configuration information is included in the system broadcast message;
   And the determination module 56 is connected with the storage module 52 and the acquisition module 54 to determine a subframe configuration according to the preset configuration rule stored by the storage module 52 and the MBSFN subframe configuration information acquired by the acquisition module 54. Specifically, the determination module 56 determines, according to the information on the number of MBSFN subframes, the number of the subframes that are configured as MBSFN subframes, and then determines, starting from a subframe #1, the subframes that are configured as MBSFN subframes, wherein subframes #0, #4, #5 and #9 cannot be configured as MBSFN subframes.

By adopting a method of setting an MBSFN subframe configuration rule to disallow the configuration of subframes #4 and #9 as MBSFN subframes, the embodiments of the present invention address the problems that MBSFN subframes are different in a different paging scene as a different number of paging subframes are configured in this scene and that it is difficult to coordinate resources between an MCE network element and an eNode B network element, and consequentially simplify the network configuration.

Apparently, it should be understood by those skilled in this art that the modules or steps of the present invention can be realized by a universal computer, centralized on a single computer or distributed on a network consisting of multiple computers, and optionally realized by computer-executable program codes; the modules or steps can be therefore stored in a storage device to be executed by a computer or separately manufactured into integrated circuit modules, or some of the modules or steps are manufactured into a single integrated circuit module. Thus, the present invention is not limited to any special combination of hardware and software.

The mentioned above is only preferred embodiments of the present invention but not limitation for the present invention, various modification and variations can be
The mentioned above is only preferred embodiments of the present invention but not limitation for the present invention, various modification and variations can be devised by those skilled in this art.

## Claims

1. A method for acquiring a multicast/broadcast over single frequency network, MBSFN, subframe configuration, wherein a radio frame comprises 10 subframes numbered from 0 to 9, the method comprising:
setting (S202) an MBSFN subframe configuration rule onto a user equipment, UE, side, wherein the MBSFN subframe configuration rule regulates the subframes configured as MBSFN subframes comprise 6 subframes numbered as #1, #2, #3, #6, #7 and #8;
acquiring (S204), by the UE, from a base station, a system broadcast message in which MBSFN subframe configuration information is included; and
determining (S206), by the UE, the subframes that are configured as MBSFN subframes according to the MBSFN subframe configuration rule and the MBSFN subframe configuration information;
wherein the MBSFN subframe configuration information is information on the number of MBSFN subframes.

2. The method according to claim 1, wherein the step that the UE determines a subframe configuration according to the MBSFN subframe configuration rule and the MBSFN subframe configuration information specifically comprises the following steps that:
the UE determines the number of the subframes that are configured as MBSFN subframes according to the information on the number of MBSFN subframes; and
the UE determines, starting from a subframe #1, the subframes that are configured as MBSFN subframes according to the determined number of subframes, wherein subframes #0, #4, #5 and #9 cannot be configured as MBSFN subframes.

3. The method according to claim 2, wherein the step of determining the subframes that are configured as MBSFN subframes from a subframe #1 specifically comprises:
determining the subframe #1 to be configured as an MBSFN subframe when the number of subframes is 1;
determining subframes #1 and #2 to be configured as MBSFN subframes when the number of subframes is 2;
determining subframes #1, #2 and #3 to be configured as MBSFN subframes when the number of subframes is 3;
determining subframes #1, #2, #3 and #6 to be configured as MBSFN subframes when the number of subframes is 4;
determining subframes #1, #2, #3, #6 and #7 to be configured as MBSFN subframes when the number of subframes is 5; and
determining subframes #1, #2, #3, #6, #7 and #8 to be configured as MBSFN subframes when the number of subframes is 6.

4. A method for configuring a multicast/broadcast over single frequency network subframe, wherein a radio frame comprises 10 subframes numbered from 0 to 9, the method comprising:
presetting (S302) an MBSFN subframe configuration rule onto a network side, wherein the MBSFN subframe configuration rule regulates the subframes configured as MBSFN subframes comprise 6 subframes numbered as #1, #2, #3, #6, #7 and #8; and
performing (S304), by a multi-cell/multicast coordination entity, MCE, an MBSFN subframe configuration according to the MBSFN subframe configuration rule and sending a system broadcast message to a UE through a base station, wherein the information on the number of MBSFN subframes is included in the system broadcast message.

5. The method according to claim 4, wherein performing, by the MCE, the MBSFN subframe configuration according to the MBSFN subframe configuration rule specifically comprises:
configuring a subframe #1 as an MBSFN subframe when the number of MBSFN subframes is 1;
configuring subframes #1 and #2 as MBSFN subframes when the number of MBSFN subframes is 2;
configuring subframes #1, #2 and #3 as MBSFN subframes when the number of MBSFN subframes is 3;
configuring subframes #1, #2, #3 and #6 as MBSFN subframes when the number of MBSFN subframes is 4;
configuring subframes #1, #2, #3, #6 and #7 as MBSFN subframes when the number of MBSFN subframes is 5; and
configuring subframes #1, #2, #3, #6, #7 and #8 as MBSFN subframes when the number of MBSFN subframes is 6.

6. An apparatus configured to acquire an MBSFN subframe, which is applied to a user equipment, UE side, comprising:
a storage module (52) configured to store a preset MBSFN subframe configuration rule which regulates the subframes configured as MBSFN subframes comprise 6 subframes numbered as #1, #2, #3, #6, #7 and #8; an acquisition module (54) configured to acquire a system broadcast message from a base station, wherein MBSFN subframe configuration information is included in the system broadcast message; and
a determination module (56) which is connected with the acquisition module (54) and the storage module (52) configured to determine the subframes that are configured as MBSFN subframes according to the MBSFN subframe configuration rule and the MBSFN subframe configuration information;
wherein the MBSFN subframe configuration information is information on the number of MBSFN subframes.

## Patentansprüche

1. Verfahren zur Erfassung einer Subframe-Konfiguration eines Multicast/Broadcast über ein Einzelfrequenznetzwerk, MBSFN, wobei ein Radio Frame zehn von 0 bis 9 nummerierte Subframes umfasst, wobei das Verfahren folgendes erfasst:
Einstellen (S202) einer MBSFN-Subframe-Konfigurationsregel auf eine Endgeräte-Seite (UE, User Equipment), wobei es die MBSFN-Subframe-Konfigurationsregel regelt, dass die als MBSFN-Subframes konfigurierten Subframes sechs Subframes umfassen, die als #1, #2, #3, #6, #7 und #8 nummeriert sind;
Erfassen (S204) durch das UE von einer Basisstation einer System-Broadcast-Nachricht, welche MBSFN-Subframe-Konfigurationsinformationen enthält; und
Bestimmen (S206) durch das UE der Subframes, die gemäß der MBSFN-Subframe-Konfigurationsregel und den MBSFN-Subframe-Konfigurationsinformationen als MBSFN-Subframes konfiguriert sind;
wobei die MBSFN-Subframe-Konfigurationsinformationen Informationen über die Anzahl der MBSFN-Subframes sind.

2. Verfahren nach Anspruch 1, wobei der Schritt der Bestimmung einer Subframe-Konfiguration durch das UE gemäß der MBSFN-Subframe-Konfigurationsregel und den MBSFN-Subframe-Konfigurationsinformationen spezifisch die folgenden Schritte umfasst:
Bestimmen der Anzahl an Subframes durch das UE, die gemäß den Informationen über die Anzahl an MBSFN-Subframes als MBSFN-Subframes konfiguriert sind; und
Bestimmen durch das UE, beginnend an einem Subframe #1, dass die Subframes gemäß der bestimmten Anzahl an Subframes als MBSFN-Subframes konfiguriert sind, wobei die Subframes #0, #4, #5 und #9 nicht als MBSFN-Subframes konfiguriert werden können.

3. Verfahren nach Anspruch 2, wobei der Schritt des Bestimmens, beginnend an einem Subframe #1, der Subframes, die als MBSFN-Subframes konfiguriert sind, spezifisch folgendes umfasst:
Bestimmen von Subframe #1, der als ein MBSFN-Subframe konfiguriert werden soll, wenn die Anzahl der Subframes gleich 1 ist;
Bestimmen der Subframes #1 und #2, die als ein MBSFN-Subframe konfiguriert werden sollen, wenn die Anzahl der Subframes gleich 2 ist;
Bestimmen der Subframes #1, #2 und #3, die als ein MBSFN-Subframe konfiguriert werden sollen, wenn die Anzahl der Subframes gleich 3 ist;
Bestimmen der Subframes #1, #2, #3 und #6, die als ein MBSFN-Subframe konfiguriert werden sollen, wenn die Anzahl der Subframes gleich 4 ist;
Bestimmen der Subframes #1, #2, #3, #6 und #7, die als ein MBSFN-Subframe konfiguriert werden sollen, wenn die Anzahl der Subframes gleich 5 ist; und
Bestimmen der Subframes #1, #2, #3, #6, #7 und #8, die als ein MBSFN-Subframe konfiguriert werden sollen, wenn die Anzahl der Subframes gleich 6 ist.

4. Verfahren zur Konfiguration einer Subframe-Konfiguration eines Multicast/Broadcast über ein Einzelfrequenznetzwerk, MBSFN, wobei ein Radio Frame zehn von 0 bis 9 nummerierte Subframes umfasst, wobei das Verfahren folgendes erfasst:
Voreinstellen (S302) einer MBSFN-Subframe-Konfigurationsregel auf einer Netzwerkseite, wobei die MBSFN-Subframe-Konfigurationsregel es regelt, dass die als MBSFN-Subframes konfigurierten Subframes sechs Subframes umfassen, die als #1, #2, #3, #6, #7 und #8 nummeriert sind; und
durch eine Mehrzellen-/Multicast-Koordinationseinheit, MCE, Ausführen einer MBSFN-Subframe-Konfiguration gemäß der MBSFN-Subframe-Konfigurationsregel und Senden einer System-Broadcast-Nachricht über eine Basisstation an ein UE, wobei die Information über die Anzahl an MBSFN-Subframes in der System-Broadcast-Nachricht enthalten ist.

5. Verfahren nach Anspruch 4, wobei das Ausführen der MBSFN-Subframe-Konfiguration gemäß der MBSFN-Subframe-Konfigurationsregel durch die MCE spezifisch folgendes umfasst:
Konfigurieren eines Subframe #1 als einen MBSFN-Subframe, wenn die Anzahl der MBSFN-Subframes gleich 1 ist;
Konfigurieren der Subframe #1 und #2 als einen MBSFN-Subframes, wenn die Anzahl der MBSFN-Subframes gleich 2 ist;
Konfigurieren der Subframe #1, #2 und #3 als einen MBSFN-Subframes, wenn die Anzahl der MBSFN-Subframes gleich 3 ist;
Konfigurieren der Subframe #1, #2, #3 und #6 als einen MBSFN-Subframes, wenn die Anzahl der MBSFN-Subframes gleich 4 ist;
Konfigurieren der Subframe #1, #2, #3, #6 und #7 als einen MBSFN-Subframes, wenn die Anzahl der MBSFN-Subframes gleich 5 ist; und
Konfigurieren der Subframe #1, #2, #3, #6, #7 und #8 als einen MBSFN-Subframes, wenn die Anzahl der MBSFN-Subframes gleich 6 ist.

6. Vorrichtung, die zur Erfassung eines MBSFN-Subframes konfiguriert ist, der einer Endgeräte-Seite (UE, User Equipment) zugeführt wird, umfassend:
ein Speichermodul (52), das so konfiguriert ist, dass es eine voreingestellte MBSFN-Subframe-Konfigurationsregel speichert, die regelt, dass die als MBSFN-Subframes konfigurierten Subframes sechs Subframes umfassen, die als #1, #2, #3, #6, #7 und #8 nummeriert sind;
ein Erfassungsmodul (54), das so konfiguriert ist, dass es eine System-Broadcast-Nachricht von einer Basisstation empfängt, wobei die MBSFN-Subframe-Konfigurationsinformationen in der System-Broadcast-Nachricht enthalten sind; und
ein Bestimmungsmodul (56), das mit dem Erfassungsmodul (54) und dem Speichermodul (52) verbunden ist, wobei es so konfiguriert ist, dass es die Subframes bestimmt, die als MBSFN-Subframes gemäß der MBSFN-Subframe-Konfigurationsregel und den MBSFN-Subframe-Konfigurationsinformationen konfiguriert sind;
wobei die MBSFN-Subframe-Konfigurationsinformationen die Informationen über die Anzahl an MBSFN-Subframes sind.

## Revendications

1. Procédé d'acquisition d'une configuration de sous-trame de réseau de diffusion/multidiffusion à fréquence unique, MBSFN, une trame radio comprenant 10 sous-trames numérotées de 0 à 9, le procédé comprenant les étapes consistant à :
définir (S202) une règle de configuration de sous-trame MBSFN sur un côté d'équipement utilisateur, UE, la règle de configuration de sous-trame MBSFN régulant les sous-trames configurées en tant que sous-trames MBSFN comprenant 6 sous-trames numérotées n° 1, n° 2, n° 3, n° 6, n° 7 et n° 8 ;
acquérir (S204), par l'UE, à partir d'une station de base, un message de diffusion de système dans lequel sont incluses des informations de configuration de sous-trame MBSFN ; et
déterminer (S206), par l'UE, les sous-trames qui sont configurées en tant que sous-trames MBSFN conformément à la règle de configuration de sous-trame MBSFN et aux informations de configuration de sous-trame MBSFN ;
les informations de configuration de sous-trame MBSFN étant des informations sur le nombre de sous-trames MBSFN.

2. Procédé selon la revendication 1, la détermination par l'UE d'une configuration de sous-trame conformément à la règle de configuration de sous-trame MBSFN et aux informations de configuration de sous-trame MBSFN comprenant spécifiquement les étapes suivantes consistant à :
déterminer par l'UE le nombre de sous-trames qui sont configurées en tant que sous-trames MBSFN en fonction des informations sur le nombre de sous-trames MBSFN ; et
déterminer par l'UE, à partir d'une sous-trame n° 1, les sous-trames qui sont configurées en tant que sous-trames MBSFN en fonction du nombre déterminé de sous-trames, les sous-trames n° 0, n° 4, n° 5 et n° 9 ne pouvant pas être configurées en tant que sous-trames MBSFN.

3. Procédé selon la revendication 2, la détermination des sous-trames qui sont configurées en tant que sous-trames MBSFN à partir d'une sous-trame n° 1 comprenant spécifiquement les étapes consistant à :
déterminer la sous-trame n° 1 à configurer en tant que sous-trame MBSFN lorsque le nombre de sous-trames est 1 ;
déterminer les sous-trames n° 1 et n° 2 à configurer en tant que sous-trames MBSFN lorsque le nombre de sous-trames est 2 ;
déterminer les sous-trames n° 1, n° 2 et n° 3 à configurer en tant que sous-trames MBSFN lorsque le nombre de sous-trames est 3 ;
déterminer les sous-trames n° 1, n° 2, n° 3 et n° 6 à configurer en tant que sous-trames MBSFN lorsque le nombre de sous-trames est 4 ;
déterminer les sous-trames n° 1, n° 2, n° 3, n° 6 et n° 7 à configurer en tant que sous-trames MBSFN lorsque le nombre de sous-trames est 5 ; et
déterminer les sous-trames n° 1, n° 2, n° 3, n° 6, n° 7 et n° 8 à configurer en tant que sous-trames MBSFN lorsque le nombre de sous-trames est 6.

4. Procédé de configuration d'une sous-trame de réseau de diffusion/multidiffusion à fréquence unique, une trame radio comprenant 10 sous-trames numérotées de 0 à 9, le procédé comprenant les étapes consistant à :
prérégler (S302) une règle de configuration de sous-trame MBSFN sur un côté réseau, la règle de configuration de sous-trame MBSFN régulant les sous-trames configurées en tant que sous-trames MBSFN comprenant 6 sous-trames numérotées n° 1, n° 2, n° 3, n° 6, n° 7 et n° 8 ; et
effectuer (S304), par une entité de coordination multicellule/multidiffusion, MCE, une configuration de sous-trame MBSFN selon la règle de configuration de sous-trame MBSFN et envoyer un message de diffusion de système à un UE par l'intermédiaire d'une station de base, les informations sur le nombre de sous-trames MBSFN étant incluses dans le message de diffusion de système.

5. Procédé selon la revendication 4, l'exécution, par la MCE, de la configuration de sous-trame MBSFN selon la règle de configuration de sous-trame MBSFN comprenant spécifiquement les étapes consistant à :
configurer une sous-trame n° 1 en tant que sous-trame MBSFN lorsque le nombre de sous-trames MBSFN est 1 ;
configurer les sous-trames n° 1 et n° 2 en tant que sous-trames MBSFN lorsque le nombre de sous-trames MBSFN est 2 ;
configurer les sous-trames n° 1, n° 2 et n° 3 en tant que sous-trames MBSFN lorsque le nombre de sous-trames MBSFN est 3 ;
configurer les sous-trames n° 1, n° 2, n° 3 et n° 6 en tant que sous-trames MBSFN lorsque le nombre de sous-trames MBSFN est 4 ;
configurer les sous-trames n° 1, n° 2, n° 3, n° 6 et n° 7 en tant que sous-trames MBSFN lorsque le nombre de sous-trames MBSFN est 5 ; et
configurer les sous-trames n° 1, n° 2, n° 3, n° 6, n° 7 et n° 8 en tant que sous-trames MBSFN lorsque le nombre de sous-trames MBSFN est 6.

6. Appareil conçu pour acquérir une sous-trame MBSFN, qui est appliquée à un côté équipement utilisateur, UE, comprenant :
un module de mémorisation (52) conçu pour mémoriser une règle de configuration de sous-trame MBSFN préréglée qui régule les sous-trames configurées en tant que sous-trames MBSFN comprenant 6 sous-trames numérotées n° 1, n° 2, n° 3, n° 6, n° 7 et n° 8 ;
un module d'acquisition (54) conçu pour acquérir un message de diffusion de système à partir d'une station de base, des informations de configuration de sous-trame MBSFN étant incluses dans le message de diffusion de système ; et
un module de détermination (56) qui est connecté avec le module d'acquisition (54) et le module de mémorisation (52) conçu pour déterminer les sous-trames qui sont configurées en tant que sous-trames MBSFN conformément à la règle de configuration de sous-trame MBSFN et aux informations de configuration de sous-trame MBSFN ;
les informations de configuration de sous-trame MBSFN étant des informations sur le nombre de sous-trames MBSFN.
